# FASCICULE DE BREVET EUROPEEN

(11) **EP 4 399 681 B1**
(45) Date de publication et mention de la délivrance du brevet: **04.02.2026**
(21) Numéro de dépôt: 22773749.1
(22) Date de dépôt: 30.08.2022
(51) Int. Cl.: G06T 7/70, G06V 10/12, G06V 10/141, G06V 10/147

(54) **DISPOSITIF DE DETECTION ET SUIVI D'OBJETS DANS UNE ZONE D'INTERET**
VORRICHTUNG ZUR ERKENNUNG UND VERFOLGUNG VON OBJEKTEN IN EINER INTERESSIERENDEN ZONE
DEVICE FOR DETECTING AND TRACKING OBJECTS IN A ZONE OF INTEREST

(30) Priorité: 09.09.2021 FR 2109428
(43) Date de publication de la demande: 17.07.2024
(73) Titulaire: Onx2 Sas, 75018 PARIS (FR)
(72) Inventeur: HUBERT, Christian Jean Jacques, 94220 Charenton Le Pont (FR); REBIFFE, Maurice, 75018 Paris (FR)
(74) Mandataire: Cabinet Beau de Loménie
(86) Numéro de dépôt international: PCT/FR2022/051628
(87) Numéro de publication internationale: WO 2023/037062

(56) Documents cités:
- CHEN GUANG ET AL: "NeuroAED: Towards Efficient Abnormal Event Detection in Visual Surveillance With Neuromorphic Vision Sensor", IEEE TRANSACTIONS ON INFORMATION FORENSICS AND SECURITY, IEEE, USA, vol. 16, 11 September 2020 (2020-09-11), pages 923 - 936, XP011812564, ISSN: 1556-6013, [retrieved on 20201007], DOI: 10.1109/TIFS.2020.3023791
- GUILLERMO GALLEGO ET AL: "Event-based Vision: A Survey", ARXIV.ORG, CORNELL UNIVERSITY LIBRARY, 201 OLIN LIBRARY CORNELL UNIVERSITY ITHACA, NY 14853, 17 April 2019 (2019-04-17), XP081170744

## Description

### Domaine Technique

La présente invention se rapporte au domaine du suivi d'objets dans une zone d'intérêt déterminée et elle concerne plus particulièrement un dispositif de détection et suivi d'objets à partir de l'image de ces objets.

### Technique antérieure

Le suivi d'objets ou de personnes en déplacement dans un espace déterminé est un problème difficile à résoudre. Les systèmes basés sur la seule reconnaissance d'images pour assurer un tel suivi ne sont guère performants car particulièrement sensibles aux conditions d'éclairage. C'est notamment le cas lorsque ces objets sont de petite taille et évoluent dans des environnements très divers que les méthodes de vision et reconnaissance classiques ne parviennent pas à appréhender valablement. CHEN GUANG et al., "NeuroAED: Towards Efficient Abnormal Event Detection in Visual Surveillance With Neuromorphic Vision Sensor", IEEE Transactions on Information Forensics and Security, vol. 16, 2020, pp. 923-936 divulgue un système de détection d'événements anormaux dans des scènes de surveillance vidéo en utilisant un capteur de vision neuromorphique, sans suivi actif.

### Exposé de l'invention

La présente invention propose de s'affranchir de ces conditions d'éclairage et de pallier les inconvénients précités avec un dispositif simple permettant une localisation, une identification et un suivi d'objets sans contraintes excessives.

Ces buts sont atteints avec un dispositif de détection et de suivi d'objets, comportant :
- un terminal de commande recevant des informations de direction relatives à des objets pénétrant la zone d'intérêt depuis un radar ou une saisie directe d'un opérateur,
- une lyre motorisée ayant 3 axes de rotation à entrainement axial direct pour le support et le déplacement omnidirectionnel d'un ensemble comprenant :
   . une caméra neuro-morphique, et
   . un module laser IR comportant une source laser infrarouge pulsée pour illuminer l'objet à identifier, et
   - un module de traitement d'images pour obtenir d'une image IR reçue par la caméra neuro-morphique des images évènementielles des objets présents dans la zone d'intérêt, pour localiser et identifier ces objets et pour commander l'orientation de la lyre motorisée afin de suivre leur déplacement dans la zone d'intérêt sur un écran de visualisation du terminal de commande.

Ainsi, l'illumination des objets par le module laser infrarouge associée à la réception d'images évènementielles par la caméra neuro-morphique montée sur une lyre omnidirectionnelle motorisée permet la localisation, l'identification et le suivi des objets en toutes circonstances.

Avantageusement, le dispositif de détection et de suivi comporte outre un module laser RVB comportant une source laser polychromatique pour émettre un faisceau laser vers l'objet identifié.

Avec ce module complémentaire, il devient possible à la fois d'éclairer l'objet pour une meilleure identification visuelle nocturne et si nécessaire de l'aveugler ou le détruire.

Avantageusement, la lyre motorisée comporte en outre une caméra couleur ou noir et blanc formant avec la caméra neuro-morphique deux caméras co-axées à objectif commun et un miroir dichroïque séparant et dirigeant l'image recueillie au travers de l'objectif commun, d'une part en une image visible vers la caméra couleur ou noir et blanc et d'autre part en une image IR vers la caméra neuro-morphique.

De préférence, la source laser infrarouge pulsée est configurée pour délivrer au travers d'une lentille de focalisation un faisceau de lumière IR pulsée en entrée d'une fibre optique multimode à cœur carré dont la sortie après un passage au travers d'une lentille de collimation est dirigée vers un collimateur de visée dont l'objectif forme l'objectif de sortie du module laser IR.

Avantageusement, la source laser polychromatique est configurée pour délivrer un faisceau de lumière blanche en entrée d'un collimateur de visée dont la sortie est reliée à un système de balayage angulaire dirigeant le faisceau de lumière blanche successivement vers chacun des objets suivis.

De préférence, la source laser polychromatique est configurée pour, selon son niveau d'intensité lumineuse, éclairer, aveugler ou détruire l'un au moins des objets identifiés.

Avantageusement, les collimateurs de visée sont des systèmes optiques afocaux avec au moins une première lentille formant oculaire et au moins une seconde lentille formant objectif, le foyer image de la première lentille étant confondu avec le foyer objet de la seconde lentille.

De préférence, le dispositif comporte en outre un module de positionnement GPS et un module d'alimentation et de commande ainsi qu'un module de communication de données radio ou lumière.

L'invention concerne également un réseau de détection et de suivi d'objets comportant au moins deux dispositifs précités en communication radio ou lumière entre eux et avec un terminal de commande commun.

L'invention se rapporte aussi à un procédé de détection et suivi d'objets dans une zone d'intérêt prédéterminée comportant :
recevoir à un terminal de commande des informations de direction relatives à des objets pénétrant dans la zone d'intérêt,
orienter une lyre motorisée supportant au moins un module laser IR comportant une source laser infrarouge pulsée et une caméra neuro-morphique, vers la zone d'intérêt,
illuminer la zone d'intérêt par le module laser IR,
obtenir une image évènementielle de chacun des objets présents dans la zone d'intérêt d'une image IR reçue par la caméra neuro-morphique, et
identifier et déterminer des coordonnées de chacun des objets identifiés à partir de leur image évènementielle et suivre leur déplacement respectif dans la zone d'intérêt sur un écran de visualisation du terminal de commande.

De préférence, le procédé comporte en outre obtenir par une caméra couleur ou noir et blanc formant avec la caméra neuro-morphique deux caméras co-axées à objectif commun, une image visible des objets présents dans la zone d'intérêt.

Dans un mode de réalisation préférentiel, il comporte en outre illuminer séquentiellement par un module laser RVB les différents objets identifiés pour, selon un niveau d'intensité lumineuse d'une source laser polychromatique du module laser RVB, éclairer, aveugler ou détruire successivement au moins l'un des objets suivis.

Avantageusement, les informations de direction sont reçues d'un radar ou saisies directement par un opérateur.

De préférence, l'identification des objets est obtenue par un logiciel de reconnaissance de forme par apprentissage profond.

### Brève description des dessins

Les caractéristiques et avantages de la présente invention ressortiront mieux de la description suivante, faite à titre indicatif et non limitatif, en regard des dessins annexés sur lesquels :
[Fig. 1] la figure 1 est une vue schématique d'une zone d'intérêt comportant un réseau maillé de dispositifs de détection et de suivi d'objets selon l'invention,
[Fig. 2] la figure 2 est une vue d'un dispositif selon l'invention du réseau de la figure 1,
[Fig. 3] la figure 3 illustre un exemple de deux caméras co-axées du dispositif de la figure 2,
[Fig. 4] la figure 4 illustre un exemple du module laser IR du dispositif de la figure 2,
[Fig.5] la figure 5 montre le séquençage de l'illumination IR sur la zone d'intérêt,
[Fig. 6] la figure 6 illustre un exemple du module laser RVB du dispositif de la figure 2,
[Fig. 7] la figure 7 illustre un exemple du réseau maillé de dispositifs de la figure 1, et
[Fig. 8] la figure 8 montre les différentes étapes du procédé de détection et suivi d'objets selon l'invention.

### Description des modes de réalisation

Pour définir avec précision la localisation et permettre le suivi d'objets se déplaçant sur une zone particulière d'intérêt, l'invention se propose de monter une caméra neuro-morphique dans un support motorisé à trois axes de rotation, perpendiculaires deux à deux, de type lyre et de l'associer à un laser IR pour détecter en temps réel tout objet apparaissant dans la zone d'intérêt et suivre son déplacement dans cette zone. L'association supplémentaire d'une caméra vidéo classique et d'un laser RVB permet en outre une meilleure identification de l'objet détecté et un aveuglement de cet objet lorsque celui-ci est souhaité.

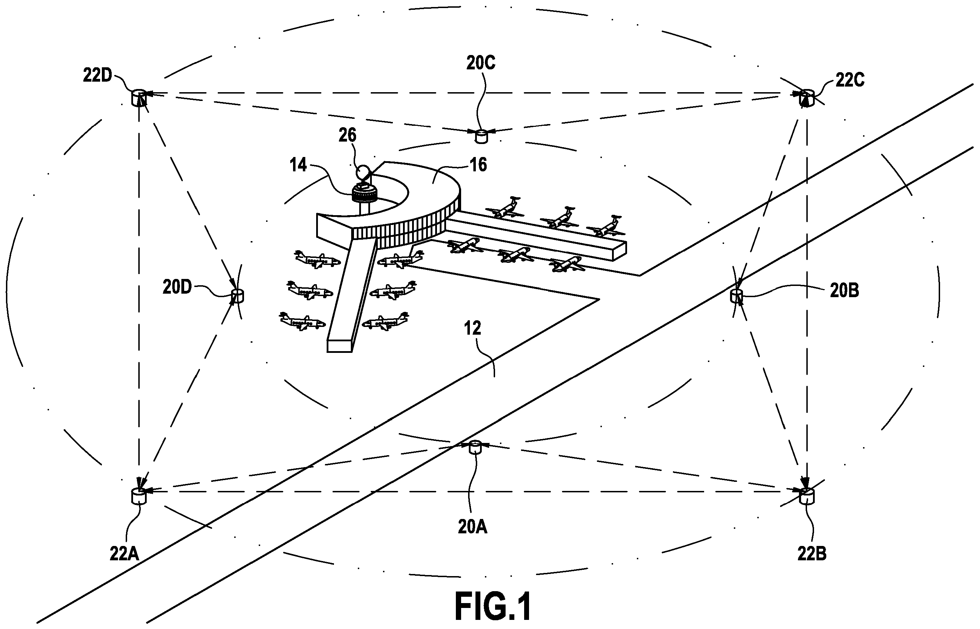

La figure 1 illustre un exemple de zone d'intérêt centrée sur un aérodrome 10 susceptible d'être survolé par des objets volants identifiés, comme un aéronef immatriculé muni de son transpondeur, ou non identifiés, comme un oiseau, un ULM ou un drone. Classiquement cet aérodrome comporte une piste d'atterrissage 12, une tour de contrôle 14 et divers halls et bâtiments 16.

Conformément à l'invention, plusieurs dispositifs de détection et suivi sont disposés tout autour de l'aérodrome en plusieurs cercles concentriques (présentement deux sans que ce nombre ne soit limitatif), en l'espèce quatre dispositifs 20A, 20B, 20C, 20D, au plus près des pistes et quatre autres dispositifs 22A, 22B, 22C, 22D dans un rayon d'environ 500 mètres des premiers (sans que cette distance ne soit elle-même limitative), la zone d'intérêt pouvant être considérée comme celle disposée dans un rayon supplémentaire de 500 mètres par rapport au premier cercle précédent, soit dans l'exemple illustré environ 1 km du centre de l'aérodrome. Ces dispositifs sont en liaison radio ou lumière entre eux et avec un terminal de commande 24 avantageusement disposé dans la tour de contrôle 14, de sorte à créer un réseau de type « toile d'araignée », le choix de l'une ou l'autre de ces technologies de communication dépendant de la configuration de la zone d'intérêt. Par liaison radio, on entend une liaison de type WiFi ou analogue et par liaison lumière, une liaison de type LiFi. Un tel réseau maillé organisé en cercles concentriques permet sans difficulté la détection simultanée de plusieurs objets de seulement quelques dizaines de centimètres à des distances de plusieurs kilomètres, cette détection pouvant être le fait d'une seule lyre motorisée ou de plusieurs dirigées vers un même groupe d'objets.

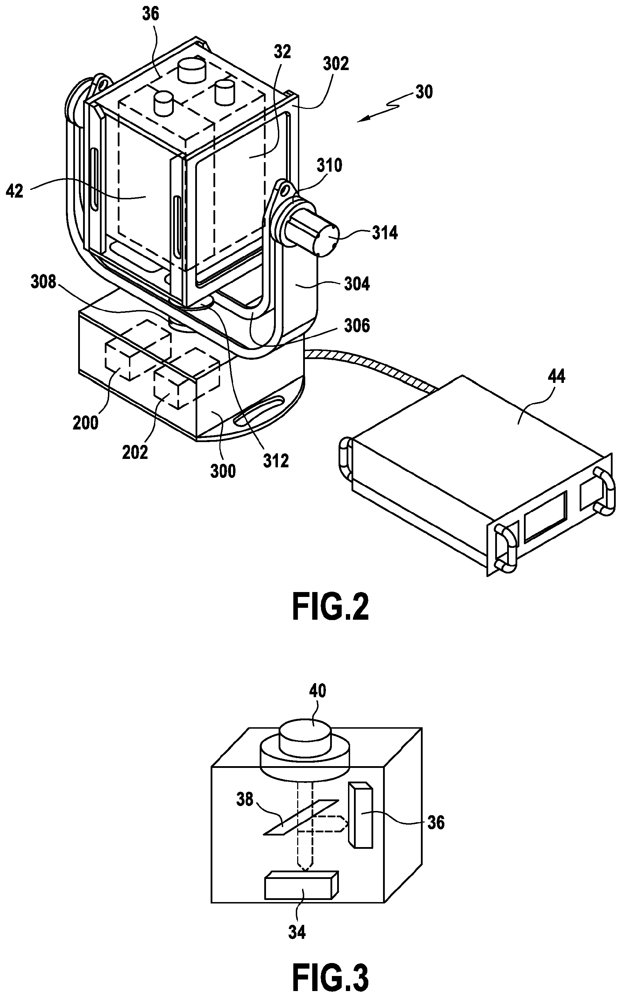

Comme il est connu, l'aérodrome est muni d'un radar doppler 26 ou tout autre type de radar analogue comme un Lidar, avantageusement disposé au niveau de la tour de contrôle 14, pour suivre les aéronefs en approche et les identifier à partir de leur transpondeur communiquant leurs coordonnées en temps réel en réponse à une interrogation de la tour de contrôle. Les dispositifs comportent en outre chacun un module de positionnement GPS 200 (voir la figure 2) permettant après une calibration initiale de se positionner entre eux et par rapport au radar doppler (en recourant au besoin à une boussole, un altimètre ou un télémètre assurant un référentiel spatio-temporel).

La figure 2 illustre un exemple d'un dispositif 20A, 20B, 20C, 20D, 22A, 22B, 22C, 22D pour détecter et suivre en liaison avec un module externe de traitement d'images 28, le déplacement omnidirectionnel des objets que le radar doppler 26 aura repérés comme pénétrant dans la zone d'intérêt. Le module de traitement d'images 28 peut être tout type d'ordinateur ou de calculateur à microprocesseur comportant par exemple un contrôleur vidéo pourvu des logiciels de traitement d'images appropriés et connus de l'homme de l'art.

Chaque dispositif de détection et suivi est constitué d'une lyre motorisée 30 assurant une rotation selon trois axes perpendiculaires deux à deux (Tilt, Pan, Roll) et supportant un module laser IR 32 et une caméra neuro-morphique 36. Selon l'application mise en œuvre et comme le montre la figure 3, le dispositif peut aussi comporter une caméra couleur ou noir et blanc 34 formant avec la caméra neuro-morphique 36 deux caméras co-axées recevant des images au travers d'un filtre dichroïque 38 et comportant un objectif commun 40 assurant zoom et focus. Cet ensemble est aussi pourvu d'un filtre passe-bande dont la bande passante est variable pour permettre une optimisation du contraste. Un module laser RVB 42 peut être également monté sur la lyre motorisée et donc se déplacer avec elle. Toutefois, il est tout à fait envisageable que ce module laser RVB soit monté sur un support externe ou une seconde lyre motorisée qui recevrait les coordonnées des objets de la première.

Revenons à la figure 2. La lyre motorisée avantageusement portable (son poids est inférieur à 30Kg) et destinée à recevoir dans un cadre support 302 l'ensemble caméras/modules laser(s), comporte deux bras 304, 306 en forme de « L » ayant chacun une première et une seconde extrémités, la première extrémité 304A du premier bras 304 étant reliée à une base 300 au niveau d'un premier axe vertical de rotation (axe horizontal « Pan » 308) et la seconde extrémité 304B du premier bras 304 étant reliée à la première extrémité 306A du second bras 306 au niveau d'un deuxième axe horizontal de rotation (axe vertical « Tilt » 310) perpendiculaire au premier axe vertical de rotation 308, la seconde extrémité 306B du second bras 306 étant reliée au cadre support 302 au niveau d'un troisième axe vertical de rotation 312 perpendiculaire au deuxième axe horizontal de rotation (axe « Roll » 310) et coaxial (dans sa position de repos) au premier axe vertical de rotation 308. Chaque axe de rotation 308, 310, 312 est motorisé par un ensemble moteur-réducteur (par exemple 314) en prise directe avec cet axe de rotation (entrainement axial direct), c'est à dire sans poulie ou courroie générateur de vibrations (d'à-coups lors des accélérations ou décélérations) et d'hystérésis (ou backlash) importants. Les moteurs sont typiquement des moteurs de type pas à pas ou par exemple à courant continu sans balais avantageusement pourvus d'un frein électromagnétique et les réducteurs sont des ensembles de moto-réduction à très haute précision de type réducteur elliptique de la société Harmonic Drive^{®} par exemple dont la précision est avantageusement comprise entre 15 et 30 Arc seconde (soit entre 0.004 et 0.0083°). La plage de déplacement des axes de rotation est typiquement de 360° sur l'axe « Pan », de 270° sur l'axe « Tilt » et de 180° sur l'axe « roll » qui permet un passage d'un mode paysage à un mode portrait et inversement.

En outre, il est également possible de gérer par l'intermédiaire de la commande de la lyre motorisée des moteurs de zoom 328 et de focus 330 de l'objectif commun 40 des deux caméras.

Bien entendu, si cette configuration en L de la lyre motorisée est privilégiée, une configuration plus classique et symétrique en U est aussi envisageable. Dans ce cas, une seule des deux extrémités du bras en U est de préférence motorisée, l'autre pouvant alors être montée en roue libre sur un simple axe de rotation non motorisé.

La lyre motorisée qu'elle soit à simple (en L) ou double (en U) bras réalise un parfait équilibre des masses avec un centre de gravité qui permet de supporter des poids élevés (de 20 à plus de 100Kg) sans bras de levier importants et donc permet ainsi d'assurer un parfait asservissement mécanique sans vibrations et avec une précision de placement, une qualité de mouvement et une répétabilité exceptionnelles. Cette structure équilibrée permet à la lyre motorisée d'être utilisée en toute position, posée sur sa base au sol, comme suspendue ou encore maintenue déportée latéralement. On se référera avantageusement à la demande FR20 01934 pour plus de détail.

La caméra couleur ou noir et blanc 34 mis en œuvre dans l'invention est connue en soi et il n'est donc pas nécessaire de la décrire en détail. Notons seulement qu'elle comporte au moins un capteur (une caméra couleur à trois capteurs RVB est aussi possible) qui peut être à technologie CMOS ou EMCCD (voir par exemple les caméras couleurs de la série IK-M de la société Toshiba).

La caméra neuro-morphique 36 est aussi connue en soi et est par exemple décrite dans la demande WO2020/120782 au nom de la société Prophesee. Elle présente la particularité de permettre l'identification et le suivi d'objet sur la base d'une matrice de capteurs d'évènements (event-based sensor) qui délivre de façon asynchrone et au-delà d'un seuil prédéterminé des évènements en fonction des variations dans les paramètres (intensité, luminance, réflectance) de la lumière reçue sur cette matrice de capteurs. En ne traitant sur chaque image qu'une faible quantité d'information, elle bénéficie d'une latence de traitement négligeable par rapport à une caméra conventionnelle et peut traiter 20000 images par seconde quand une caméra conventionnelle en traite seulement 200. Elle permet donc une détection en toutes circonstances grâce à sa réponse temporelle de l'ordre de 50 microsecondes et sa dynamique exceptionnelle de détection de lumière de 120dB (à comparer au 40dB d'une caméra conventionnelle).

Comme le montre la figure 3, le miroir dichroïque 38 est disposé à 45° derrière l'objectif commun 40 dans l'axe optique de la caméra couleur ou noir et blanc. Il reçoit l'image de l'objet qui d'une part le traversant va se diriger vers la caméra 34 et d'autre part renvoyé perpendiculairement à cet axe optique va se diriger vers la caméra neuro-morphique 36. Pour laisser passer l'image visible vers la caméra couleur ou noir et blanc, le miroir dichroïque comporte une bande de longueur d'ondes de transmission comprise entre 400 et 700 nm et pour réfléchir l'image infrarouge vers la caméra neuro-morphique une bande de longueur d'ondes de réjection comprise entre 700 et 900 nm.

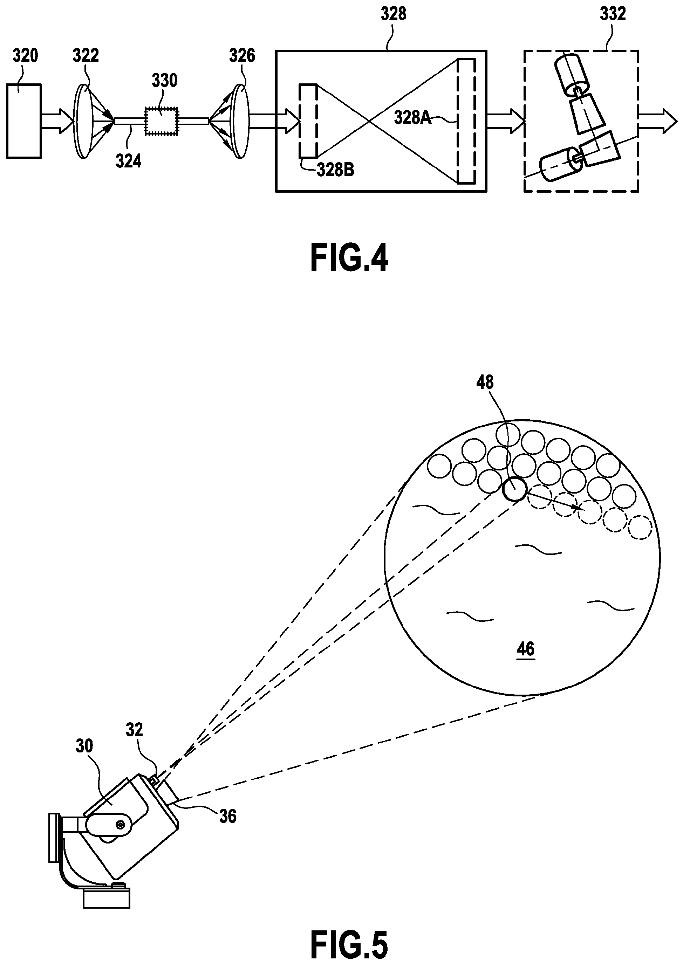

Le module laser IR 32 est illustré plus précisément à la figure 4. Il comporte une source laser infrarouge (320) d'une puissance comprise entre 10 et 400 Watts et typiquement de 20 à 100 Watts qui délivre au travers d'une lentille de focalisation 322 un faisceau de lumière IR de longueur d'onde comprise entre 800 et 975 nm en entrée d'une fibre optique multimode 324 dont la sortie après un passage au travers d'une lentille de collimation 326 est dirigée vers un collimateur de visée 328 dont l'objectif 328A forme l'objectif de sortie du module laser IR 32. La fibre optique multimode comporte un cœur carré qui procure un profil d'intensité lumineuse uniforme de type « flap-top/Top-Hat » et peut aussi comporter avantageusement un dispositif contre le chatoiement (antispeckle 330). La fibre à cœur carré en procurant un très haut contraste et un focus net à l'infini, permet une illumination IR extrêmement précise (20 cm à 2km) et de très longue portée (jusqu'à 5 kilomètres) pour un grossissement donné afin de concentrer au maximum l'intensité lumineuse sur l'objet selon sa distance. Il est ainsi possible d'obtenir une illumination centré sur l'objet ou plus large recouvrant un cône semblable à celui du radar doppler. De façon alternative, cette illumination centrée sur l'objet peut aussi être obtenue avec une meilleure précision en disposant en sortie du module laser IR 32 un système de balayage 332, du type moteur scanner galvanométrique à miroir assurant un balayage horizontal et vertical (de trype raster) à une fréquence de 500Hz à 2KHz. Comme la montre la figure 5, avec un tel système à miroir, il devient possible de diriger de façon séquentielle (en suivant un trajet prédéfini et illustré par la flèche) le faisceau de lumière IR 48 issu du module laser IR 32 vers chacun des objets de la zone d'intérêt 46 éclairée par la caméra neuro-morphique 36.

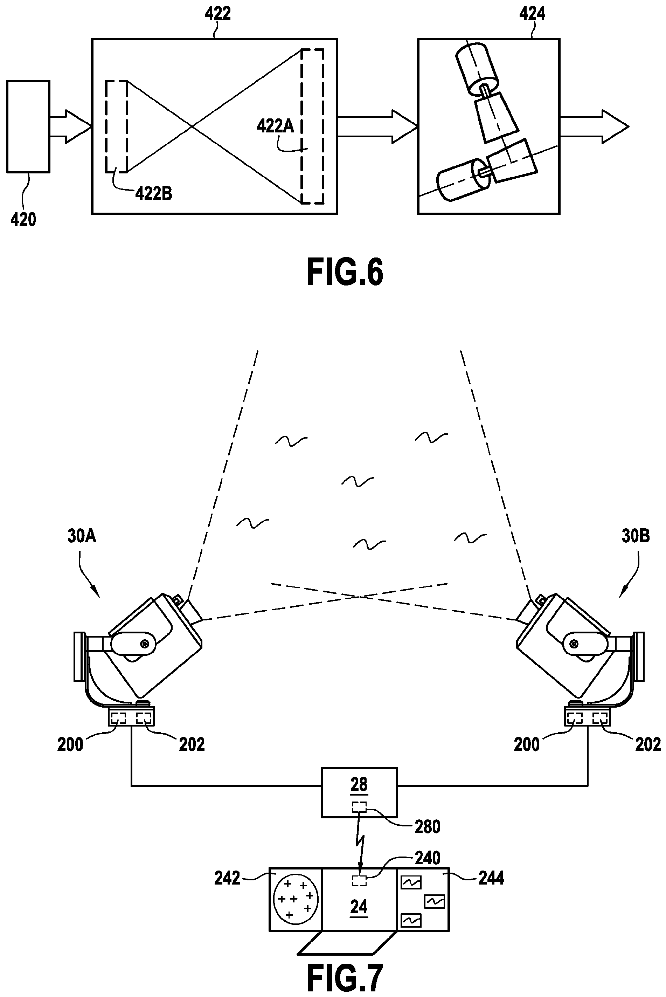

Le module laser RVB 42 est illustré plus précisément à la figure 6. Il comporte une source laser polychromatique (420) d'une puissance comprise entre 10 et 200 Watts et typiquement de 160 Watts qui délivre un faisceau de lumière blanche de 2400 à 9600 K de longueur d'onde comprise entre 400 et 700 nm en entrée d'un collimateur de visée 422 dont la sortie est reliée à un système de balayage angulaire 424, du type moteur scanner galvanométrique à miroir, dirigeant successivement, en sortie du module laser RVB 42, le faisceau de lumière vers chacun des objets suivis. La source laser polychromatique comporte avantageusement au moins deux et préférentiellement trois niveaux d'intensité lumineuse, permettant selon ce niveau un simple éclairement (intensité de classe 1) pour l'obtention d'une image visible de l'objet, un aveuglement (intensité de classe 3) de l'objet ou une destruction de l'objet (intensité de classe 4).

Les collimateurs de visée classiquement de type lunette de Galilée, sont des systèmes optiques afocaux (refracting telescope) avec au moins une première lentille 328B, 422B formant oculaire et au moins une seconde lentille 328A, 422A formant objectif, le foyer image de la première lentille étant confondu avec le foyer objet de la seconde lentille. De telles collimateurs permettent classiquement des grossissements de 50 fois et plus.

Les sources laser haute puissance infrarouge 320 ou polychromatique 420 peuvent par exemple être du type de celles décrites dans les demandes FR3031569 et FR3034497. Lorsque les puissances mises en jeu sont très élevées et qu'une dissipation thermique importante au niveau de la lyre motorisée n'est pas envisageable, la source laser peut être déportée dans un module externe 44 comme illustrée à la figure 2 et enseignée dans la demande FR3065344.

La figure 7 montre un exemple de protection d'un site d'intérêt par la détection et le suivi d'objets survolant ce site au moyen d'un réseau de protection formé de deux dispositifs de détection et suivi comportant chacun une lyre motorisée 30A, 30B dirigée de façon à couvrir au mieux tout ou partie de l'espace à surveiller au-dessus de ce site. Dans la base de chaque lyre motorisée, on a représenté le module de positionnement GPS 200 et un module d'alimentation et de commande 202 nécessaire à l'alimentation en tension et la commande du déplacement de la lyre motorisée sur ses différents axes selon des protocoles de transfert de données connus comme RS485, DMX512, Art-Net ou PSN (Position Stage Net). Un module de communication de données radio ou lumière 280 assurant la liaison radio ou lumière avec le terminal de commande 24 est représenté au niveau du module externe de traitement d'images 28 qui de préférence communique par liaison filaire avec les lyres motorisées. Toutefois, notamment lorsque que le dispositif de détection et suivi est unique, la base de la lyre motorisée peut alors intégrer le module de traitement d'images et le module de communication pour une communication directe avec le terminal de commande.

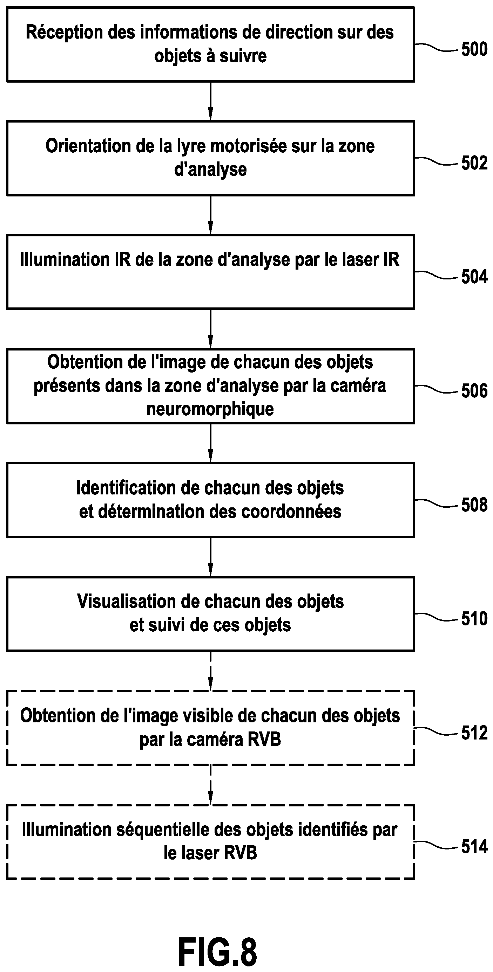

Le fonctionnement de l'invention illustré par les étapes du procédé de la figure 8 sera maintenant décrit en se référant à l'exemple précédent de la figure 7 qui montre un site sensible protégé par deux dispositifs selon l'invention disposés par exemple à deux extrémités de ce site et en liaison avec un terminal de commande commun 24 disposé sur le site lui-même ou à l'extérieur de celui-ci et visualisant sur un de ses écrans de contrôle 242 l'image radar résultant de la rotation sur 360° d'un radar doppler (illustré à la figure 1 et par exemple extérieur au site à protéger) scrutant l'espace à surveiller au-dessus de ce site.

La réception d'informations de direction de ce radar doppler signalant sur l'écran de contrôle 242 l'entrée d'un ou plusieurs objets volants dans son rayon d'action et donnant ses ou leurs coordonnées (distance et azimut) et éventuellement son identification s'il s'agit d'un aéronef pourvu d'un transpondeur, constitue la première étape 500 du procédé de l'invention.

Dans une deuxième étape 502, sur la base des informations sur l'objet communiquées au dispositif de suivi, il est procédé à l'orientation de la lyre motorisée vers une zone de l'espace déterminée où se trouvent ce ou ces objets identifiés ou non à surveiller, cette zone étant plus ou moins large selon le nombre d'objets concerné et pouvant ou non recouvrir celle du radar doppler. Cette orientation de la lyre motorisée qui est avantageusement communiquée en retour (les valeurs des angles de « Pan », « Tilt » et « Roll ») au terminal de commande 24, implique bien évidemment celle de l'objectif commun 40 des caméras et celle des lasers qu'elle supporte vers cette même zone déterminée de l'espace à surveiller. Lorsque plusieurs objets sont signalés venant de directions opposées, il est approprié d'orienter une première lyre motorisée vers une zone de l'espace et une deuxième lyre motorisée vers une zone opposée de cet espace mais, lorsqu'un grand nombre d'objets provient d'une même direction, il est au contraire approprié de diriger les deux lyres motorisées dans cette seule direction. On notera toutefois que lorsque les informations de direction sont obtenues directement par un opérateur muni de simples jumelles et non par le radar, l'orientation de la lyre motorisée peut être effectuée directement au terminal de commande au moyen d'un simple joystick ou d'un trackball ou via l'entrée de coordonnées de longitude/latitude.

La troisième étape 504 du procédé consiste à illuminer la zone déterminée de l'espace à surveiller où se trouvent le ou les objets par la source laser infrarouge dont le fonctionnement peut être continu ou plus avantageusement pulsé (c'est-à-dire modulée à une fréquence de 10Hz à 100KHz avec un rapport cyclique de 10 à 120%). Cette illumination IR permet de créer des contrastes de lumière sur l'objet impacté qui ainsi va mieux se démarquer de son environnement et faciliter le traitement des images par la caméra neuro-morphique. En cas de lyre motorisée unique, cette illumination doit correspondre alors au moins au rayon d'action du radar doppler alors que s'il existe par exemple deux dispositifs de suivi chaque illumination doit pouvoir couvrir la zone d'intérêt de chacune des deux lyres motorisées.

A la quatrième étape 506, la caméra neuro-morphique 36 par une analyse d'images basée sur des évènements asynchrones va obtenir une image évènementielle de chacun des objets présents dans son champ de vision et préalablement illuminés par le module laser IR, et, via le module de traitement d'images 28, va identifier chacun de ces objets et en déterminer les coordonnées précises dans une étape suivante 508. Cette identification est effectuée en recourant à un logiciel de reconnaissance d'images et un algorithme connu d'apprentissage profond (par exemple l'algorithme de deep learning de la société Bionomeex) pouvant différentier un ULM ou un drone d'un oiseau et les identifier avec un taux de réussite supérieur à 90%. On notera que le recours à une source laser infrarouge pulsée pour l'illumination de l'objet permet de créer en toutes circonstances un évènement détectable pour la caméra neuro-morphique, de jour comme de nuit, alors qu'un objet fixe tel qu'un drone en mode stationnaire, est indétectable par le radar doppler ou par la seule caméra neuro-morphique à moins qu'elle ne soit munie de moyens spécifiques d'action sur l'objectif commun 40 comme ceux décrits dans le demande WO2021/089216.

Dans une suivante étape 510, les coordonnées de chacun des objets identifiés sont horodatées avec les images adressées au terminal de commande 24 pour un affichage et un suivi de ces objets sur l'écran de visualisation 244.

En cas de doute sur l'identification, il est toujours possible de recourir dans une étape 512 à la caméra couleur ou noir et blanc 34 pour obtenir une image visible de chacun des objets identifiés ou non. Cependant, lorsqu'il fait nuit, il est préférable de recourir préalablement à l'illumination de l'objet au moyen du module laser RVB 42 dont la source laser polychromatique est alors sélectionnée à son premier niveau (classe 1) correspondant à un simple éclairement. Cette obtention d'une image visible de l'objet permet de confirmer la présence de l'objet et de le situer dans son environnement après avoir été détecté par la caméra neuro-morphique.

Le suivi des objets permet dans une étape finale 514 à l'opérateur posté devant le terminal de commande de décider de l'action à mener au cas où l'un ou plusieurs de ces objets seraient de nature à mettre en danger le fonctionnement ou la sécurité du site protégé. Il peut s'agir par exemple de l'envoi d'oiseaux de proie pour effrayer des oiseaux migrateurs ou de drones béliers pour percuter des drones malveillants. Il est aussi possible de recourir au module laser RVB 42 qui peut envoyer au travers du scanner galvanométrique à miroir 424 successivement (une fréquence de 500Hz permet par exemple d'illuminer séquentiellement 6 à 8 objets) un faisceau de lumière blanche sur chacun des drones malveillants pour selon le niveau d'intensité de la source laser polychromatique en aveugler (niveau de classe 3) les optiques de détection voire le détruire (niveau de classe 4). On notera que cette illumination en lumière visible donc multi-spectrale rend inopérant toute protection du drone basée sur un simple filtre dichroïque.

## Revendications

1. Dispositif de détection et suivi d'objets dans une zone d'intérêt, comportant :
- un terminal de commande (24) recevant des informations de direction relatives à des objets pénétrant la zone d'intérêt depuis un radar doppler ou une saisie directe d'un opérateur,
- une lyre motorisée (30) ayant 3 axes de rotation à entrainement axial direct pour le support et le déplacement omnidirectionnel d'un ensemble, la lyre motorisée étant apte à déplacer l'ensemble sur la base des informations communiquées par le terminal de commande (24), l'ensemble comprenant une caméra neuro-morphique (36) et un module laser IR (32) comportant une source laser infrarouge pulsée pour illuminer l'objet à identifier,
le dispositif comportant en outre :
- un module de traitement d'images (28) pour obtenir d'une image IR reçue par la caméra neuro-morphique des images évènementielles de chacun des objets présents dans la zone d'intérêt, pour localiser et identifier ces objets et pour commander l'orientation de la lyre motorisée afin de suivre leur déplacement respectif dans la zone d'intérêt sur un écran de visualisation (244) du terminal de commande.

2. Dispositif selon la revendication 1, **caractérisé en ce qu'**il comporte outre un module laser RVB (42) comportant une source laser polychromatique pour émettre un faisceau laser vers l'objet identifié.

3. Dispositif selon la revendication 1, **caractérisé en ce que** la lyre motorisée comporte en outre une caméra couleur ou noir et blanc (34) formant avec la caméra neuro-morphique deux caméras co-axées à objectif commun (40), et un miroir dichroïque (38) séparant et dirigeant l'image recueillie au travers de l'objectif commun, d'une part en une image visible vers la caméra couleur ou noir et blanc et d'autre part en une image IR vers la caméra neuro-morphique.

4. Dispositif selon la revendication 1, **caractérisé en ce que** la source laser infrarouge pulsée (320) est configurée pour délivrer au travers d'une lentille de focalisation (322) un faisceau de lumière IR pulsée en entrée d'une fibre optique multimode à cœur carré (324) dont la sortie après un passage au travers d'une lentille de collimation (326) est dirigée vers un collimateur de visée (328) dont l'objectif (328A) forme l'objectif de sortie du module laser IR.

5. Dispositif selon la revendication 2, **caractérisé en ce que** la source laser polychromatique (420) est configurée pour délivrer un faisceau de lumière blanche en entrée d'un collimateur de visée (422) dont la sortie est reliée à un système de balayage angulaire (424) dirigeant le faisceau de lumière blanche successivement vers chacun des objets suivis.

6. Dispositif selon la revendication 5, **caractérisé en ce que** la source laser polychromatique est configurée pour, selon son niveau d'intensité lumineuse, éclairer, aveugler ou détruire l'un au moins des objets identifiés.

7. Dispositif selon la revendication 4 ou la revendication 5, **caractérisé en ce que** les collimateurs de visée sont des systèmes optiques afocaux avec au moins une première lentille (328B, 422B) formant oculaire et au moins une seconde lentille (328A, 422A) formant objectif, le foyer image de la première lentille étant confondu avec le foyer objet de la seconde lentille.

8. Dispositif selon l'une quelconque des revendications 1 à 7, **caractérisé en ce qu'**il comporte en outre un module de positionnement GPS (200) et un module d'alimentation et de commande (202).

9. Dispositif selon l'une quelconque des revendications 1 à 8, **caractérisé en ce qu'**il comporte en outre un module de communication de données radio ou lumière (280).

10. Réseau de détection et de suivi d'objets comportant au moins deux dispositifs selon la revendication 9 en communication radio ou lumière entre eux et avec un terminal de commande commun (24).

11. Procédé de détection et suivi d'objets dans une zone d'intérêt prédéterminée comportant :
- recevoir à un terminal de commande (24) des informations de direction relatives à des objets pénétrant dans la zone d'intérêt depuis un radar doppler ou une saisie directe d'un opérateur,
- orienter une lyre motorisée (30) ayant 3 axes de rotation à entrainement axial direct et supportant au moins une caméra neuro-morphique (36) et un module laser IR (32) comportant une source laser infrarouge pulsée, vers la zone d'intérêt sur la base des informations communiquées par le terminal de commande (24),
- illuminer la zone d'intérêt par le module laser IR,
- obtenir une image évènementielle de chacun des objets présents dans la zone d'intérêt d'une image IR reçue par la caméra neuro-morphique, et
- identifier et déterminer les coordonnées de chacun des objets identifiés à partir de leur image évènementielle et suivre leur déplacement respectif dans la zone d'intérêt sur un écran de visualisation (244) du terminal de commande.

12. Procédé selon la revendication 11, comportant en outre obtenir par une caméra couleur ou noir et blanc (34) formant avec la caméra neuro-morphique deux caméras co-axées à objectif commun (40), une image visible des objets présents dans la zone d'intérêt.

13. Procédé selon la revendication 11 ou la revendication 12, comportant en outre illuminer séquentiellement par un module laser RVB (42) les différents objets identifiés pour, selon un niveau d'intensité lumineuse d'une source laser polychromatique (420) du module laser RVB, éclairer, aveugler ou détruire au moins l'un des objets suivis.

14. Procédé selon l'une quelconque des revendications 11 à 13, dans lequel les informations de direction sont reçues d'un radar doppler ou saisies directement par un opérateur.

15. Procédé selon l'une quelconque des revendications 11 à 14, dans lequel l'identification des objets utilise un logiciel de reconnaissance de forme par apprentissage profond.

## Patentansprüche

1. Vorrichtung zur Erfassung und Verfolgung von Objekten in einer Zone von Interesse, die beinhaltet:
- ein Steuerterminal (24), das Richtungsinformationen über Objekte, welche in die Zone von Interesse eindringen, von einem Dopplerradar oder einer direkten Eingabe eines Bedieners empfängt,
- ein motorisiertes kardanisches System (30) mit direktem axialem Antrieb, das 3 Drehachsen aufweist, zum Tragen und omnidirektionalen Bewegen einer Anordnung, wobei das motorisierte kardanische System dazu geeignet ist, die Anordnung auf Basis von Informationen, die von dem Steuerterminal (24) kommuniziert werden, zu bewegen, wobei die Anordnung eine neuromorphe Kamera (36) und ein IR-Lasermodul (32) umfasst, welches eine gepulste Infrarot-Laserquelle zum Beleuchten des zu identifizierenden Objekts beinhaltet, wobei die Vorrichtung außerdem Folgendes beinhaltet:
- ein Bildverarbeitungsmodul (23), um aus einem IR-Bild, das von der neuromorphen Kamera empfangen wird, Ereignisbilder von jedem der Objekte, die in der Zone von Interesse vorliegen, zu erhalten, um diese Objekte zu lokalisieren und zu identifizieren und um die Ausrichtung des motorisierten kardanischen Systems zu steuern, um deren jeweilige Bewegung in der Zone von Interesse auf einem Anzeigebildschirm (244) des Steuerterminals zu verfolgen.

2. Vorrichtung nach Anspruch 1, **dadurch gekennzeichnet, dass** sie ferner ein RGB-Lasermodul (42) beinhaltet, das eine polychromatische Laserquelle beinhaltet, um einen Laserstrahl auf das identifizierte Objekt auszusenden.

3. Vorrichtung nach Anspruch 1, **dadurch gekennzeichnet, dass** das motorisierte kardanische System ferner eine Farb- oder Schwarzweiß-Kamera (34), die zusammen mit der neuromorphen Kamera zwei gleichachsige Kameras mit gemeinsamem Objektiv (40) bildet, und einen dichroitischen Spiegel (38) beinhaltet, der das durch das gemeinsame Objektiv eingefangene Bild in ein sichtbares Bild einerseits, das zu der Farb- oder Schwarzweiß-Kamera gerichtet wird, und in ein IR-Bild andererseits trennt, das zu der neuromorphen Kamera gerichtet wird.

4. Vorrichtung nach Anspruch 1, **dadurch gekennzeichnet, dass** die gepulste Infrarot-Laserquelle (320) dazu ausgestaltet ist, über eine Fokussierlinse (322) einen gepulsten IR-Lichtstrahl an den Eingang einer optischen Multimode-Faser mit quadratischem Kern (324) zu liefern, deren Ausgang nach einem Durchgang durch eine Kollimationslinse (326) auf einen Visier-Kollimator (328) gerichtet ist, dessen Objektiv (328A) das Ausgangsobjektiv des IR-Lasermoduls bildet.

5. Vorrichtung nach Anspruch 2, **dadurch gekennzeichnet, dass** die polychromatische Laserquelle (420) dazu ausgestaltet ist, einen Weißlichtstrahl an den Eingang eines Visier-Kollimators (422) zu liefern, dessen Ausgang mit einem Winkelabtastsystem (424) verbunden ist, das den Weißlichtstrahl der Reihe nach auf jedes der verfolgten Objekte richtet.

6. Vorrichtung nach Anspruch 5, **dadurch gekennzeichnet, dass** die polychromatische Laserquelle dazu ausgestaltet ist, gemäß ihrem Lichtintensitätsniveau zumindest eines der identifizierten Objekte zu beleuchten, zu blenden oder zu zerstören.

7. Vorrichtung nach Anspruch 4 oder Anspruch 5, **dadurch gekennzeichnet, dass** die Visier-Kollimatoren afokale optische Systeme sind, mit zumindest einer ersten Linse (328B, 422B), die ein Okular bildet, und zumindest einer zweiten Linse (328A, 422A), die ein Objektiv bildet, wobei der Bildfokus der ersten Linse mit dem Objektfokus der zweiten Linse zusammenfällt.

8. Vorrichtung nach einem der Ansprüche 1 bis 7, **dadurch gekennzeichnet, dass** sie ferner ein GPS-Positionierungsmodul (200) und ein Stromversorgungs- und Steuermodul (202) beinhaltet.

9. Vorrichtung nach einem der Ansprüche 1 bis 8, **dadurch gekennzeichnet, dass** sie ferner ein optisches oder Funk-Datenkommunikationsmodul (280) enthält.

10. Netzwerk zur Erfassung und Verfolgung von Objekten, das zumindest zwei Vorrichtungen nach Anspruch 9 in optischer oder Funkkommunikation untereinander und mit einem gemeinsamen Steuerterminal (24) beinhaltet.

11. Verfahren zur Erfassung und Verfolgung von Objekten in einer vorbestimmten Zone von Interesse, das beinhaltet:
- Empfangen, an einem Steuerterminal (24), von Richtungsinformationen in Bezug auf Objekte, die in die Zone von Interesse eindringen, von einem Dopplerradar oder einer direkten Eingabe eines Bedieners,
- Ausrichten eines motorisierten kardanischen Systems (30) mit direktem axialem Antrieb, das 3 Drehachsen aufweist, und zumindest eine neuromorphische Kamera (36) und ein IR-Lasermodul (32) trägt, das eine gepulste Infrarot-Laserquelle beinhaltet, auf die Zone von Interesse auf der Grundlage der von dem Steuerterminal (24) kommunizierten Informationen,
- Beleuchten der Zone von Interesse mit dem IR-Lasermodul,
- Erhalten eines Ereignisbilds von jedem der Objekte, die in der Zone von Interesse vorhanden sind, aus einem IR-Bild, das von der neuromorphen Kamera empfangen wird, und
- Identifizieren und Bestimmen der Koordinaten jedes der identifizierten Objekte ausgehend von ihrem Ereignisbild und Verfolgen ihrer jeweiligen Bewegung in der Zone von Interesse auf einem Anzeigebildschirm (244) des Steuerterminals.

12. Verfahren nach Anspruch 11, das ferner beinhaltet, durch eine Farb- oder Schwarzweiß-Kamera (34), die zusammen mit der neuromorphen Kamera zwei koaxiale Kameras mit gemeinsamem Objektiv (40) bildet, ein sichtbares Bild von Objekten zu erhalten, die in der Zone von Interesse vorhanden sind.

13. Verfahren nach Anspruch 11 oder Anspruch 12, das ferner das sequenzielle Beleuchten der verschiedenen identifizierten Objekte durch ein RGB-Lasermodul (42) umfasst, um, gemäß einem Lichtintensitätsniveau einer polychromatischen Laserquelle (420) des RGB-Lasermoduls, zumindest eines der verfolgten Objekte zu beleuchten, zu blenden oder zu zerstören.

14. Verfahren nach einem der Ansprüche 11 bis 13, wobei die Richtungsinformationen von einem Dopplerradar empfangen oder direkt von einem Bediener eingegeben werden.

15. Verfahren nach einem der Ansprüche 11 bis 14, wobei die Identifizierung von Objekten eine Software zur Mustererkennung durch Deep Learning einsetzt.

## Claims

1. A device for detecting and tracking objects in an area of interest, including:
- a control terminal (24) receiving direction information relating to objects entering the area of interest from a radar or a direct input from an operator,
- a motorized yoke (30) having 3 axes of rotation with direct axial drive for the support and the omnidirectional displacement of an assembly, the motorized yoke being able to move the assembly based on the information communicated by the control terminal, the assembly comprising a neuromorphic camera (36) and an IR laser module (32) including a pulsed infrared laser source to illuminate the object to be identified,
the device further including:
- an image processing module (28) for obtaining, from an IR image received by the neuromorphic camera, event images of each of the objects present in the area of interest, for locating and identifying these objects and for controlling the orientation of the motorized yoke in order to track their respective displacement in the area of interest on a display screen (244) of the control terminal.

2. The device according to claim 1, **characterized in that** it further includes a RGB laser module (42) including a polychromatic laser source to emit a laser beam towards the identified object.

3. The device according to claim 1, **characterized in that** the motorized yoke further includes a color or black and white camera (34) forming with the neuromorphic camera two co-focused cameras with a common objective lens (40), and a dichroic mirror (38) separating and directing the image collected through the common objective lens, on the one hand into a visible image towards the color or black and white camera and on the other hand into an IR image towards the neuromorphic camera.

4. The device according to claim 1, **characterized in that** the pulsed infrared laser source (320) is configured to deliver through a focusing lens (322) a beam of pulsed IR light at the input of a square-core multimode optical fiber (324) whose output after passage through a collimating lens (326) is directed towards a sighting collimator (328) whose objective lens (328A) forms the output objective lens of the IR laser module.

5. The device according to claim 2, **characterized in that** the polychromatic laser source (420) is configured to deliver a beam of white light at the input of a sighting collimator (422) whose output is connected to an angular scanning system (424) directing the beam of white light successively towards each of the tracked objects.

6. The device according to claim 5, **characterized in that** the polychromatic laser source is configured in order, depending on its light intensity level, to light, blind or destroy the at least one of the identified objects.

7. The device according to claim 4 or 5, **characterized in that** the sighting collimators are afocal optical systems with at least one first lens (328B, 422B) forming an eyepiece and at least one second lens (328A, 422A) forming an objective lens, the image focus of the first lens being coincident with the object focus of the second lens.

8. The device according to any one of claims 1 to 7, **characterized in that** it further includes a GPS positioning module (200) and a power supply and control module (202).

9. The device according to any one of claims 1 to 8, **characterized in that** it further includes a radio or light data communication module (280).

10. A network for detecting and tracking objects, including at least two devices according to claim 9 in radio or light communication with each other and with a common control terminal (24).

11. A method for detecting and tracking objects in a predetermined area of interest including:
- receiving, at a control terminal (24), direction information relating to objects entering the area of interest from a Doppler radar or a direct input from an operator,
- orienting a motorized yoke (30) having 3 axes of rotation with direct axial drive and supporting at least a neuromorphic camera (36) and an IR laser module (32) including a pulsed infrared laser source, towards the area of interest based on the information communicated by the control terminal,
- illuminating the area of interest using the IR laser module,
- obtaining an event image of each of the objects present in the area of interest of an IR image received by the neuromorphic camera, and
- identifying and determining the coordinates of each of the objects identified from their event image and tracking their respective displacement in the area of interest on a display screen (244) of the control terminal.

12. The method according to claim 11, further including obtaining, by a color or black and white camera (34) forming with the neuromorphic camera two co-focused cameras with a common objective lens (40), a visible image of the objects present in the area of interest.

13. The method according to claim 11 or 12, further including sequentially illuminating by a RGB laser module (42) the different identified objects in order, depending on a light intensity level of a polychromatic laser source (420) of the RGB laser module, to light, blind or destroy at least one of the tracked objects.

14. The method according to any one of claims 11 to 13, wherein the direction information is received from a radar or entered directly by an operator.

15. The method according to any one of claims 11 to 14, wherein the identification of the objects uses shape recognition software through deep learning.
